# EUROPEAN PATENT SPECIFICATION

(11) **EP 4 336 643 B1**
(45) Date of publication and mention of the grant of the patent: **14.05.2025**
(21) Application number: 22194031.5
(22) Date of filing: 06.09.2022
(51) Int. Cl.: H01M 50/514, H01M 50/519, H01M 50/55, H01M 50/557, H01M 50/569, H01M 10/48, H01M 10/42, H01M 50/503, H01M 50/507

(54) **MODULAR CONNECTION BOARD AND METHOD FOR CONNECTING A MODULAR CONNECTION BOARD**
MODULARE ANSCHLUSSPLATTE UND VERFAHREN ZUM VERBINDEN EINER MODULAREN ANSCHLUSSPLATTE
CARTE DE CONNEXION MODULAIRE ET PROCÉDÉ DE CONNEXION D'UNE CARTE DE CONNEXION MODULAIRE

(43) Date of publication of application: 13.03.2024
(73) Proprietor: TE Connectivity Germany GmbH, 64625 Bensheim (DE); Tyco Electronics (Shanghai) Co., Ltd., Pilot Free Trade Zone Shanghai 200131 (CN)
(72) Inventor: Ginsburg, Alexander, 64625 Bensheim (DE); Zhou, Xiao (Nichee), Shanghai, 200233 (CN)
(74) Representative: Grünecker Patent- und Rechtsanwälte PartG mbB

(56) References cited:
- CN-B- 108 321 318
- CN-U- 203 596 381
- US-A1- 2015 255 774
- US-A1- 2018 269 445
- US-A1- 2021 265 707

## Description

The present invention relates to a modular connection board and a method for connecting a modular connection board to a group of electricity storage elements each including electrode terminals.

Rechargeable or secondary batteries that can be repeatedly charged and discharged are widely used in many different devices, like stationary electricity storage systems, or electric vehicles, such as battery electric vehicles (BEV), hybrid electric vehicles (HEV), and plug-in hybrid electric vehicles (PHEV).

In general, rechargeable batteries include an electrode assembly including a positive electrode, a negative electrode, and a separator interposed between the positive and negative electrodes, a case accommodating the electrode assembly, and an electrode terminal electrically connected to the electrode assembly. The shape of the case, e.g. cylindrical or rectangular, may be varied according to the intended purpose and design of the device.

Generally, to provide sufficient power output rechargeable batteries are composed of battery modules, which comprise a plurality of unit battery cells coupled in series and/or in parallel. The battery modules are formed by interconnecting the electrode terminals of the plurality of unit battery cells, wherein the number of unit battery cells depends on the required amount of power. A plurality of battery modules can be combined in order to realize a high-power rechargeable battery, e.g. for an electric or hybrid vehicle. One or more battery modules are then mechanically and electrically integrated, equipped with a thermal management system and set up for communication with one or more electrical consumers in order to form a battery system.

For electrically integrating the battery module, generally an electronic connection assembly is attached to the unit battery cells of the battery module, which is formed by a bracket or support member, on which a plurality of connection members, usually in the form of bus bars, are mounted in order to electrically connect the electrode terminals of adjacent unit battery cells. The electronic connection assembly may further comprise various detection circuits, like temperature sensors or voltage detection elements, and a circuit board with circuitry, for example, for processing the detection signals of the detection circuits and/or balancing the voltages of the unit battery cells of the battery module, and/or communicating with a battery management system of the battery system or a vehicle electronic control unit (ECU).

For example, CN 108 321 318 B discloses a battery connecting module. The battery connecting module comprises a plurality of current converging connecting pieces, two output electrodes and a carrier. The carrier comprises a plurality of current converging connecting piece bearing units for bearing the multiple current converging connecting pieces and two output electrode bearing units for bearing the two output electrodes, respectively.

Commonly used battery modules however comprise a relatively small number of unit battery cells, so that it is necessary to integrate a large number of battery modules into the battery system for providing sufficient output power. To save space and costs, it is therefore desirable to reduce the number of battery modules by coupling a larger number of unit battery cells per battery module. For example, with the advance of prismatic unit battery cells, it is possible to couple up to 50 or more prismatic unit battery cells by sticking the prismatic unit battery cells together in a longitudinal direction to form one battery module, which may be also signified as battery string. However, such a battery module or battery string may have large dimensions in the longitudinal direction and it is also necessary to detect voltage signals and temperature detection signals of each unit battery cell. Accordingly, it becomes difficult to electrically integrate such a battery module or battery string by a commonly used electronic connection assembly, since the assembly process of the detection path and the system integration becomes complex due to the large number of unit battery cells to be connected and the large number of detection signals to be measured.

At least one of the above-described objectives is solved by the subject matter of the independent claims. Advantageous embodiments of the present invention are the subject matter of the dependent claims.

The present disclosure provides a low cost modular press-fit interconnection system, wherein a plurality of individual cell-to cell-interconnection boards are directly linked with each other by mechanical joints to form a modular electronic connection assembly. Accordingly, the provided modular electronic connection assembly is easily and with low expenses adaptable to any unit cell configuration of a battery module or battery string. Assembled printed circuit boards (PCBA) can be press-fitted on the individual cell-to cell-interconnection boards for detecting the voltage signals and temperature detection signals of the unit battery cells, to which the individual cell-to-cell interconnection board is attached, and can be electrically interconnected with board-to-board connectors to simplify the wiring for transmitting the detection signals to a central controller of the battery module or battery string.

In particular, the present invention provides a modular connection board, which is configured to be attached to a group of electricity storage elements each including electrode terminals. The modular connection board comprises at least two connection board modules, wherein each of the at least two connection board modules comprises a bracket including a plurality of connection member mounting portions, which are arranged to form a first row along one of a pair of first side edges of the connection board module, and to form a second row along the other one of the pair of first side edges of the connection board module, wherein the pair of first side edges of the connection board module extends in a first direction, a plurality of connection members, which are mounted in the plurality of connection member mounting portions, for connecting the electrode terminals of adjacent electricity storage elements to each other, and a circuit board supporting portion, which is arranged on the bracket and configured to receive a circuit board, wherein at least one holding element is arranged in the circuit board supporting portion, which is configured to hold the circuit board by a press-fit connection. Between each two adjacent connection board modules an interface is provided, which extends in a second direction different from the first direction, and which comprises at least one joint for joining the two adjacent connection board modules with each other.

In this manner, it is possible to easily adapt the modular connection board to any needed configuration of unit battery cells, as an example of the group of electricity storage elements, by changing the number of connection board modules provided or by using different kind of connection board modules having varying numbers of connection members attached. Furthermore, instead of fabricating one integrally formed connection board with large dimensions at least in the longitudinal direction of the connected battery module or battery string, it is possible to fabricate the individual connection board modules having smaller dimensions with already tested fabrication processes, and to interconnect the connection board modules in a following assembly step. Accordingly, the complexity in the assembling process of the connection board can be drastically reduced. Furthermore, since circuit boards can be easily mechanically connected to the individual connection board modules and can serve as conductors for the detection signals, the wiring for transmitting the detection signals can be drastically reduced. By the modular setup of the modular connection board, it also becomes easier to exchange only affected parts in case of a defect.

Throughout this document, the term "connection board module" means a subunit of the modular connection board, which is attachable to a part of the unit battery cells of a battery module or battery string, and mechanically connectable to at least one other "connection board module". The terms "battery cell" or "unit battery cell" shall refer to either a physical battery cell, or several physical battery cells electrically connected in parallel on a cell level.

In a preferred embodiment, the at least two connection board modules are joined with each other at the interface between each two adjacent connection board modules.

In other words, the modular connection board may be provided in an assembled state, where the individual connection board modules are already joined with each other. However, it is also possible to provide the modular connection board in a pre-assembled state before joining the individual connection board modules, so that for example a battery manufacturer can assemble the modular connection board and directly adapt it to the needed configuration of a battery module or battery string.

For enabling a secure mechanical connection between the connection board modules, the interface between each two adjacent connection board modules comprises at least two joints provided at opposite sides along the interface.

The at least one joint may be one of a dovetail joint, a hinge-based joint and a chain-based joint. This design has the advantage to allow an assembly direction either along the first direction, which corresponds to the extension direction of the rows of bus bar members, via the dovetail joint or the chain based joint, or an assembly direction along the second direction, which corresponds to the extension direction of the interface, via the hinge-based joint. Accordingly, the joining of the connection board modules can be adapted to application needs.

In another advantageous example, the interface may comprise a first interface region, which extends between the first row of connection members, and a second interface region, which extends between the second row of connection members, wherein the first interface region is displaced with respect to the second interface region in the first direction, so that an electricity storage element arranged at the interface is electrically connected to respectively one connection member of each of the two adjacent connection board modules. Such asymmetric design of the interface has the advantage that the dimensions of the modular connection bard can be efficiently reduced, so that a space saving configuration can be provided.

For simplifying the electric connectivity between adjacent connection board modules, an electronic connector may be provided at the interface between each two adjacent connection board modules. The electronic connector may comprise a first contact interface for electrically connecting a first circuit board supportable on one of the two adjacent connection board modules to the electronic connector and a second contact interface for electrically connecting a second circuit board, supportable on the other one of the two adjacent connection board modules, to the electronic connector.

In this manner, electronic connection between the circuit boards supportable on different connection board modules can be simply achieved by connecting the boards to the connector at the interface, which acts as a board-to board connector when mechanically joining the connection board modules at the interface. Hereby, the circuit boards may be for example soldered to the connector or may be pressed-in via a press-fit connection.

According to an advantageous example, the first contact interface and the second contact interface may be electrically connected by flexible flat conductors. In this manner, it is possible to allow tolerance compensation when connecting the circuit boards. As an alternative, it is however also possible to use connectors with rigid conductors arranged in a lead frame, in order to enhance the stability of the connection between the circuit boards. Further, also various other connectors may be used, which for example allow an opening of the electric connection by a plug in connection.

For enhancing the connection stability between the two connection board modules and provide a space-saving solution, a socket of the first contact interface and a socket of the second contact interface may be mounted on a same one of the two adjacent connection board modules.

The present disclosure also relates to a modular connection assembly comprising the modular connection board, wherein each of the at least two connection board modules further comprises a circuit board being fixed in the circuit board supporting portion via the press-fit connection. By the press-fit connection, a simple and reliable electrical connection from the circuit boards to the connection board modules can be achieved. The circuit boards may be preferably rigid printed circuit boards (PCB), but also flexible printed circuit boards are possible. The circuit boards may only comprise conductors for transmitting the detection signals from corresponding unit cells to a central controller of the battery module or battery string. Optionally, circuitry, like one or more integrated circuits, for processing the detection signals may be attached to the circuit boards and electrically connected to the conductors of the circuit boards, so that the circuit boards may be assembled printed circuit boards (PCBA).

For providing a stable press-fit connection, which is convenient to assemble, the circuit board may comprise a plurality of press-fit through-holes, and each of the connection members may be electrically connected to the corresponding circuit board through a press fit terminal, which comprises a connection end, which is electrically connected to the connection member, and a press fit end, which extends into at least a part of one of the plurality of press fit holes provided on the circuit board and is electrically connected with the circuit board. As an alternative, however, also press-fit studs may be integrally formed with the bracket of the connection board modules and the press-fit studs may extend into at least a part of the press-fit through hole of the circuit board.

According to another preferred embodiment, each circuit board may comprise circuitry for determining a state, including at least one of a voltage or a temperature, and optionally circuitry for balancing a charge of those electricity storage elements, to which the connection board module, which supports the respective circuit board, is attached. Accordingly, it is possible to provide a decentralized monitoring architecture, wherein each circuit board provides at least a part of monitoring functionality for monitoring a state of the attached electricity storage elements, and accordingly takes some of the functionalities of a central control unit of the battery module or battery string like a battery management system or a vehicle ECU. Hereby, the circuitry attached to each circuit board may be realized by providing individual integrated circuits for performing certain monitoring functions, or by providing a single integrated circuit, which integrates all the monitoring functions. Alternatively, a centralized monitoring architecture may be implemented, where the circuit boards may simply comprise a plurality of conductors, which allow to transmit the detection signals from the detection circuits associated with the circuit board to the central control unit of the battery module or battery string. The monitoring functions may then solely be performed in the central control unit.

The present invention further relates to a method for connecting a modular connection board to a group of electricity storage elements each including electrode terminals, the method comprising:
providing at least two connection board modules, each of the at least two connection board modules comprising:
   a bracket including a plurality of connection member mounting portions, which are arranged to form a first row along one of a pair of first side edges of the connection board module, and to form a second row along the other one of the pair of first side edges of the connection board module, wherein the pair of first side edges of the connection board module extends in a first direction;
   a plurality of connection members, which are mounted in the plurality of connection member mounting portions, for connecting the electrode terminals of adjacent electricity storage elements to each other; and
   a circuit board supporting portion, which is arranged on the bracket and configured to receive a circuit board, wherein at least one holding element is arranged in the circuit board supporting portion, which is configured to hold the circuit board by a press-fit connection;
joining each two adjacent connection board modules with each other by at least one joint of an interface, which extends in a second direction different from the first direction;
attaching the modular connection board to the group of electricity storage elements.

According to an advantageous example, the two adjacent connection board modules may be joined with each other by assembling the two adjacent connection board modules along the first direction. For this purpose, for example a dovetail joint or a chain based joint may be provided at the interface between each two adjacent connection board modules. Alternatively, the two adjacent connection board modules may be joined with each other by assembling the two adjacent connection board modules along a direction diagonal to the first direction. For this purpose, for example a hinge based joint may be provided at the interface between each two adjacent connection board modules.

In another aspect, the method may further comprise mounting a circuit board in the circuit board supporting portion of each of the at least two connection board modules via the press-fit connection. Hereby the mounting of the circuit board may be preferably performed after the step of joining each two adjacent connection board modules with each other. But also another order of the steps is possible, i.e. the circuit boards may be mounted to the connection board modules before each two adjacent connection board modules are joined with each other

The invention will now be described in greater detail and in an exemplary manner using advantageous embodiments and with reference to the drawings. The described embodiments are only possible configurations in which, however, the individual features as described above can be provided independently of one another or can be omitted.

The accompanying drawings are incorporated into the specification and form a part of the specification to illustrate several embodiments of the present invention. These drawings, together with the description serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form-individually or in different combinations-solutions according to the present invention. The following described embodiments thus, can be considered either alone or in an arbitrary combination thereof. The described embodiments are merely possible configurations and it must be borne in mind that the individual features as described above can be provided independently of one another or can be omitted altogether while implementing this invention. Further features and advantages will become apparent from the following more particular description of the various embodiments of the invention, as illustrated in the accompanying drawings, in which like references refer to like elements, and wherein:
- **FIG. 1**: shows a schematic top view of an exemplary modular connection assembly including an exemplary modular connection board;
- **FIG. 2**: shows a schematic perspective view of an exemplary connection board module before assembling;
- **FIG. 3**: shows a schematic perspective view of an exemplary first connection board module;
- **FIG. 4**: shows a schematic perspective view of an exemplary second connection board module;
- **FIG. 5**: shows a schematic perspective view of an exemplary third connection board module;
- **FIG. 6**: shows a schematic perspective view of an exemplary fourth connection board module;
- **FIG. 7**: shows a schematic exploded view of the exemplary first connection board module;
- **FIG. 8**: shows a schematic perspective view of the exemplary modular connection assembly including the exemplary modular connection board;
- **FIG. 9**: shows another schematic perspective view of the exemplary modular connection assembly including the exemplary modular connection board;
- **FIG. 10**: shows a schematic top view of an exemplary interface between two connection board modules;
- **FIG. 11**: shows a schematic perspective view of another exemplary interface between two connection board modules;
- **FIG. 12**: shows a schematic perspective view of a first exemplary board-to-board connector;
- **FIG. 13**: shows a schematic perspective view of a second exemplary board-to-board connector;
- **FIG. 14**: shows a schematic perspective view of another exemplary interface between two connection board modules;
- **FIG. 15**: shows a schematic perspective view of the exemplary modular connection board before assembling of circuit boards.

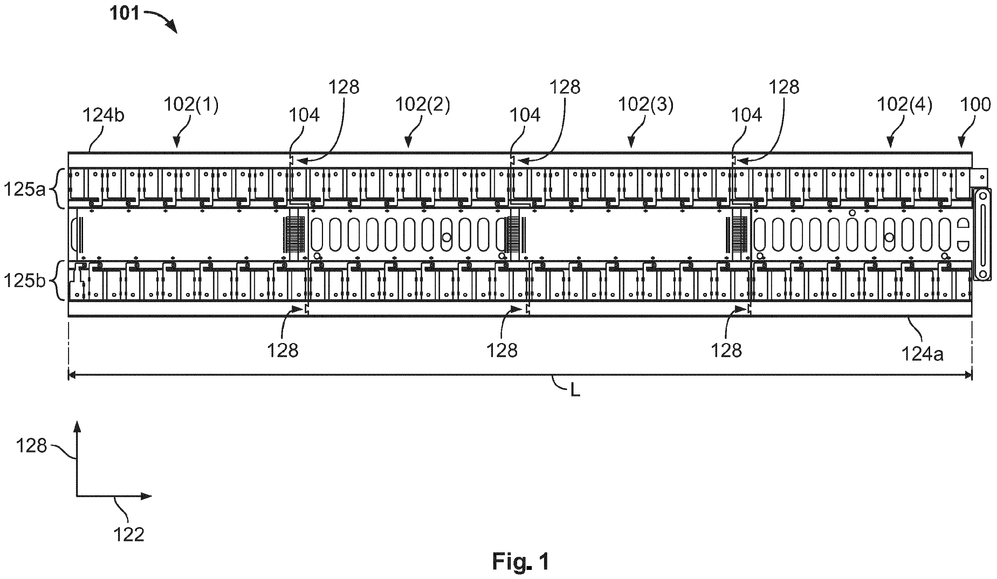

The present invention will now be explained in more detail with reference to the Figures. Referring first to Fig. 1, an exemplary modular connection board 100, which forms the basis of an exemplary modular connection assembly 101 (in the following also "connection module"), is described. In the illustrated example, the modular connection board 100 comprises four connection board modules 102, which in the following are signified as connection board modules 102(1) to 102(4), for a better distinction. The number of connection board modules 102 is not restricted to four, but may be varied according to application needs to be any number equal to or greater than two. In particular, by varying the number of connection board modules 102, which are arranged in between a first connection board module 102(1), which may also be signified as "front side connection board module", and a fourth connection board module 102(4), which may be also signified as "end side connection board module", the modular connection board 100 may be adapted to a number of unit battery cells of a battery module and a length L of the modular connection board 100 may be varied accordingly.

In other words, the modular connection board 100 is formed of individual connection board modules 102(1) to 102(4), which are assembled together during fabrication of the modular connection board 100. For assembling the connection board modules 102, in between each two adjacent connection board modules 102, an interface 104 is provided, where the two adjacent connection board modules 102 are joined with each other. In the illustrated example, the interface 104 is provided between the connection board modules 102(1) and 102(2), between the connection board modules 102(2) and 102(3), and between the connection board modules 102(3) and 102(4).

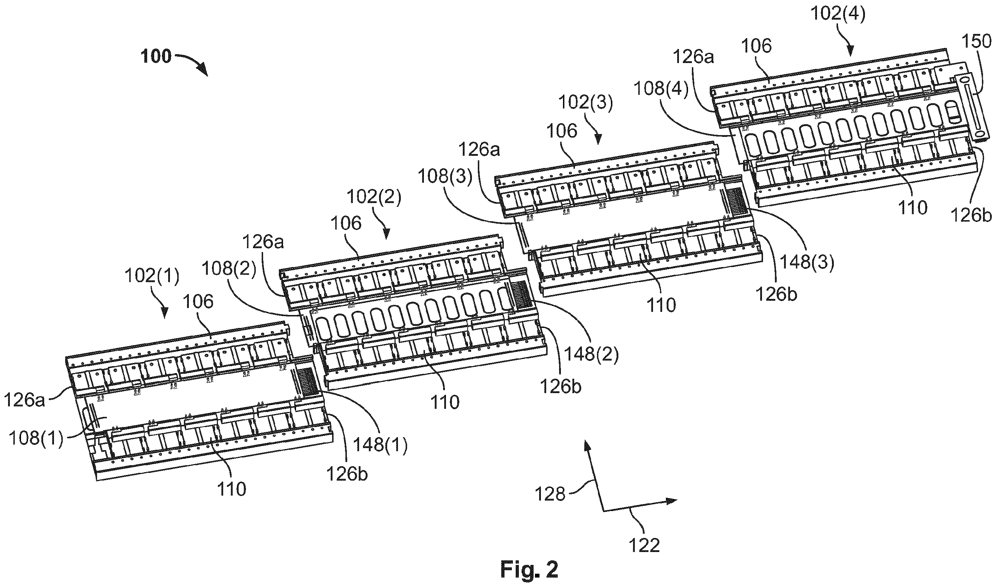

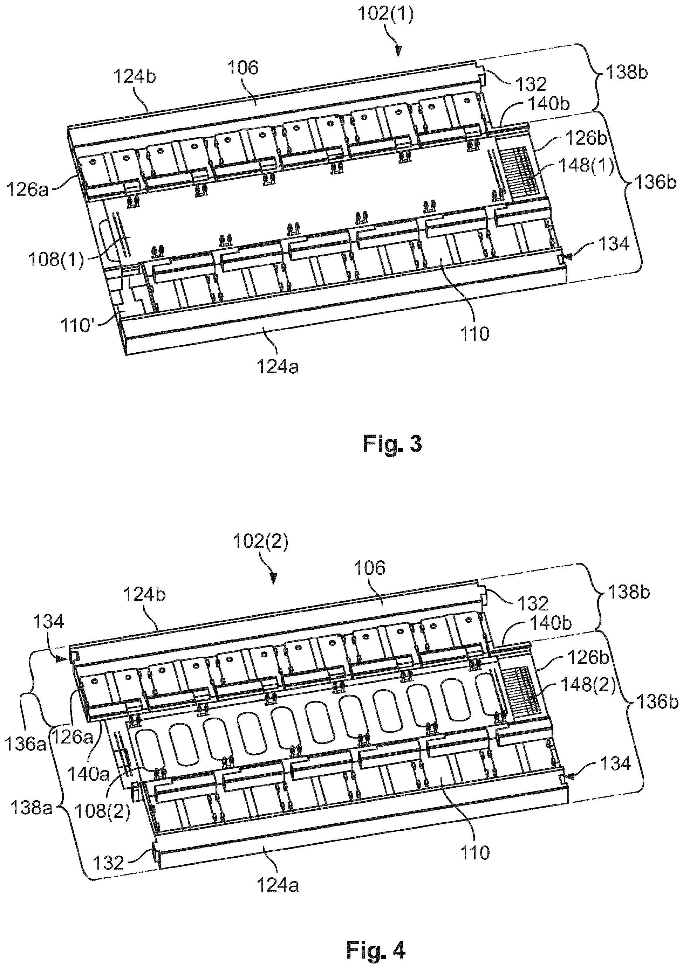

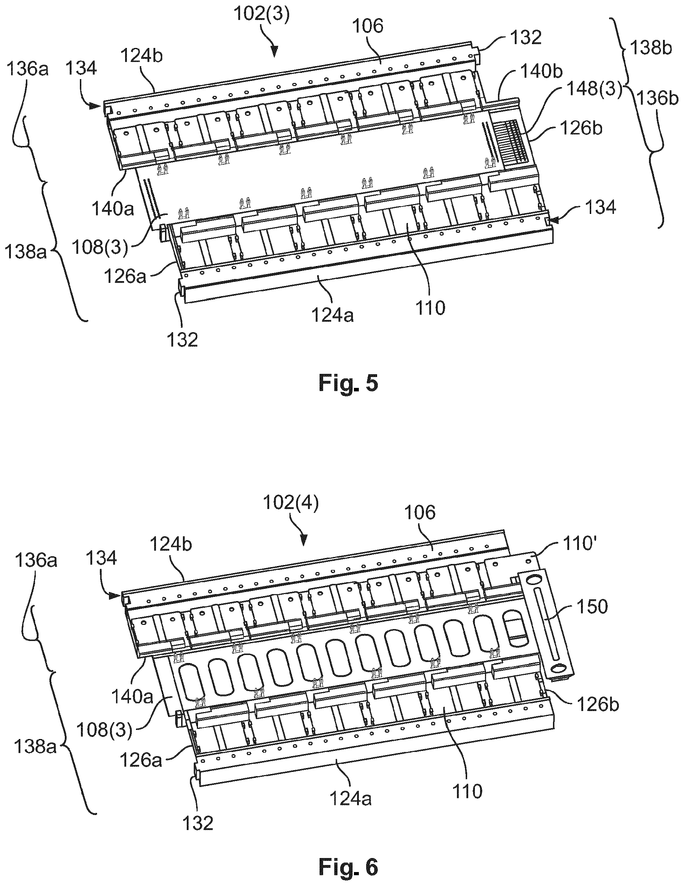

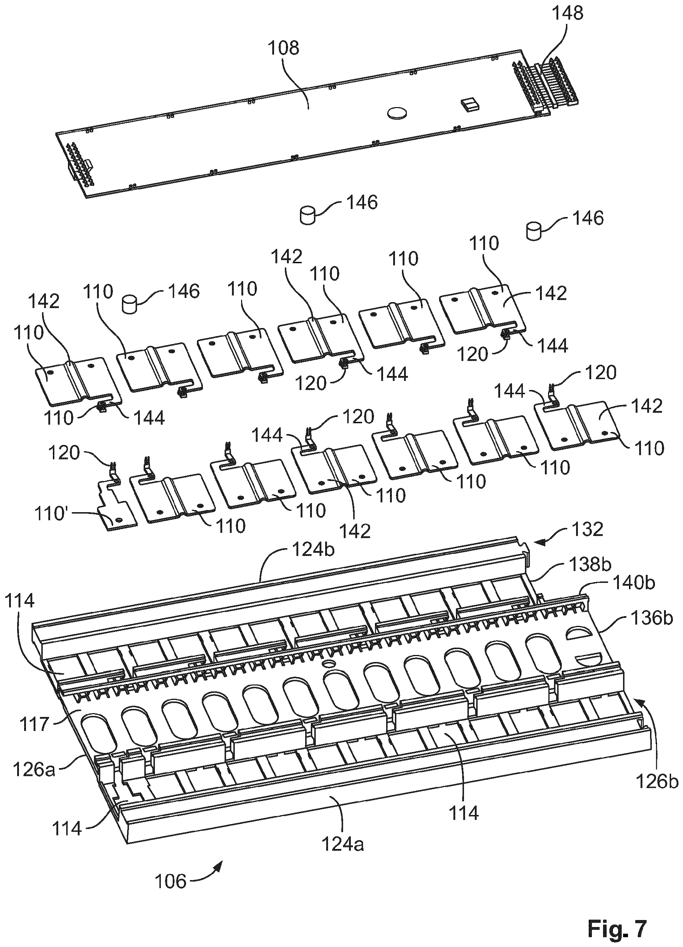

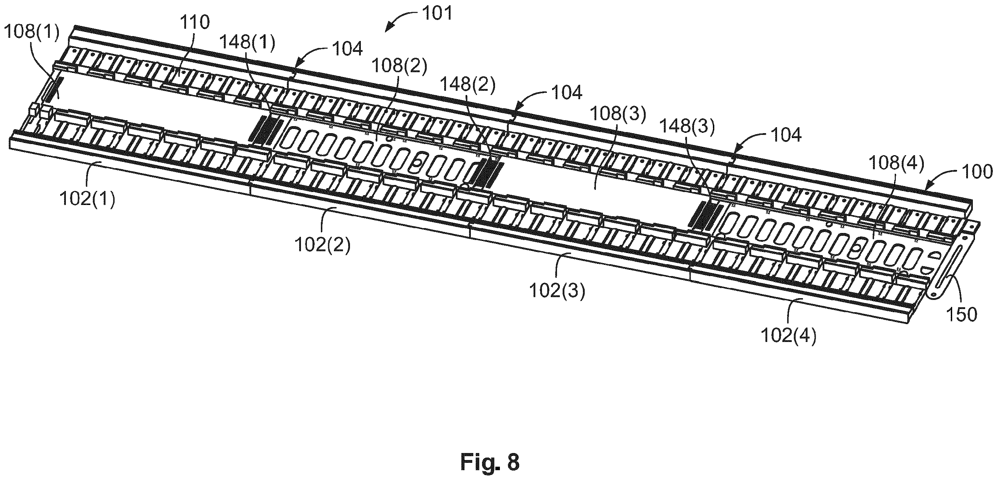

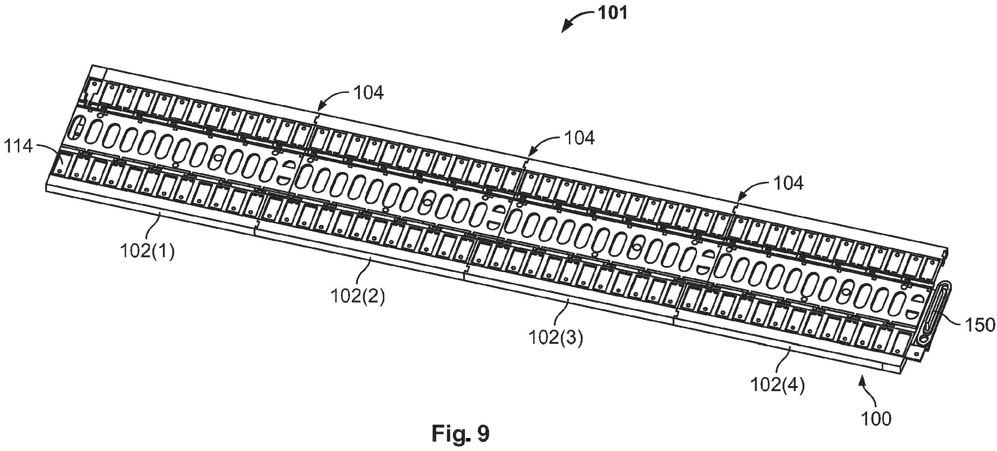

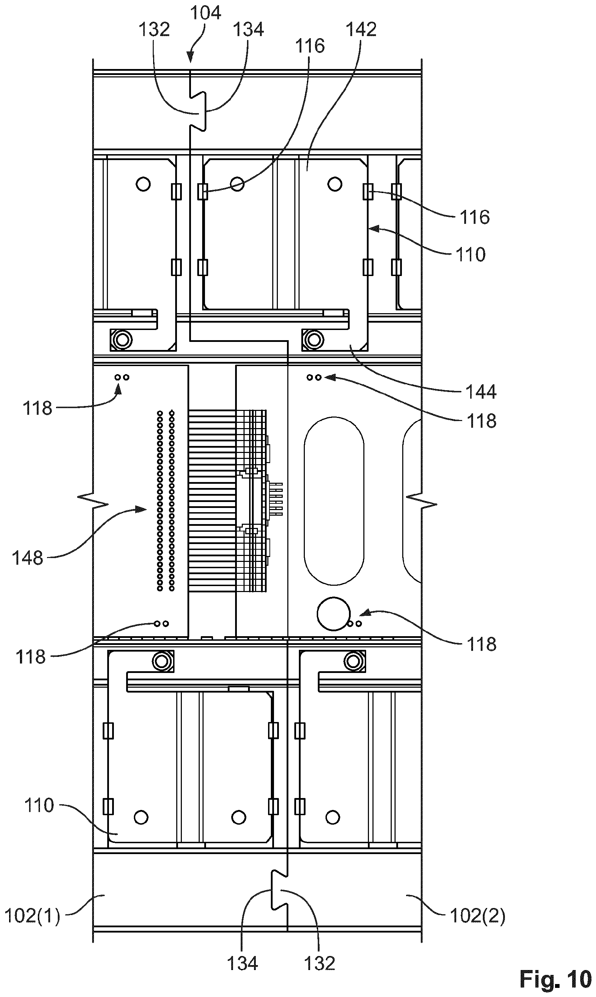

The individual connection board modules 102(1) to 102(4) will now be explained in more detail with reference to Figs. 2 to 10. Hereby, Fig. 2 shows a schematic perspective view of the exemplary modular connection board 100, where the connection board modules 102(1) to 102(4) are illustrated as individual components before assembly. Figs. 3 to 6 show schematic perspective views of each of the connection board modules 102(1) to 102(4) individually. Fig. 7 shows a schematic exploded view of the first connection board module 102(1). Fig. 8 shows a schematic perspective view of a top portion of the connection module 101, which is formed by fixing circuit boards 108 to each of the connection board modules 102 of the modular connection board 100, and Fig. 9 shows a schematic perspective view of a bottom side of the connection module 101. Fig. 10 shows an enlarged schematic top view of the interface 104 after assembly between the connection board modules 102(1) and 102(2) as an exemplary interface 104 provided between each two adjacent the connection board modules 102.

Each connection board module 102 comprises a bracket 106, and a plurality of connection members 110. The connection module 101 is formed by fixing a circuit board 108 on the bracket 106 of each connection board module 102 and joining the connection board module 102 with each other at the interfaces 104. In Figs. 2 to 7, the circuit board 108 is fixed on the bracket 106 of each connection board module 102 already before assembly of the modular connection board 100, however, the circuit boards 108 may be mounted to the modular connection board 100 also after joining the connection board modules 102. The connection members 110 are disposed on each bracket 106 and are configured to be electrically connected with the corresponding circuit board 108. For better illustration, the circuit boards 108 mounted on the connection board modules 102 are alternately shown transparent in the Figures.

The bracket 106 of each connection board module 102 is a support structure, which may be attached to a part of the unit battery cells of a battery module or battery string. The bracket 106 may be a lead-frame. In this example, the bracket 106 is substantially plate-shaped. To facilitate securely holding the connection members 110, the bracket 106 is provided with a plurality of mounting grooves 112, which may be also signified as connection member mounting portions. In this embodiment, the mounting grooves 112 are substantially rectangular grooves. The mounting grooves 112 are through-grooves. In other words, the mounting grooves 112 have a bottom through-hole 114. A bottom portion of the mounting groove 112 is provided with a stepped portion. The stepped portion is disposed surrounding the bottom through-hole 114 to support the connection member 110. The bottom through-hole 114 enables an electrode terminal of a unit battery cell (not shown in the figures) to extend from a bottom portion of the bracket 106 to be electrically connected with the connection member 110, thereby sufficiently utilizing spaces at two sides of a top portion and a bottom portion of the bracket 106. The number and arrangement of the mounting grooves 112 may be selected according to connection needs. In this example, the mounting grooves 112 are arranged in two rows with each row comprising a plurality of mounting grooves 112.

In other words, in this example the plurality of mounting grooves or connection member mounting portions 112 are arranged in a first row and in a second row, which extend in a longitudinal direction (first direction) 122 along the pair of long side edges (first side edges) 124a and 124b of the bracket 106. As apparent from Figs. 1, 8 and 9 the two rows of connection member mounting portions 112 are arranged in such a manner that a first row 125a and a second row 125b of connection members 110 are formed on the modular connection board 100, which extends in the longitudinal direction 122, after the connection board modules 102 have been joined with each other. Accordingly, in the shown example, the plurality of connection members 110 can be arranged on the modular connection board 100 for connecting connection board modules 102 of two adjacent prismatic unit battery cells to each other, wherein the prismatic unit battery cells are stacked next to each other to form a longitudinal battery module or battery string, which extends in the longitudinal direction 122.

To further securely hold the connection members 110, the bracket 106 may be provided with a snap joint 116. The snap joint 116 may be configured to be snap-fitted with the connection member 110. The specific number and specification of the snap joint 116 may be selected according to actual needs. In this example every four snap joints 116 are snap-fitted with one corresponding connection member 110, the four snap joints 116 being disposed at two sides of the corresponding mounting groove 112.

To allow reception of the circuit board 108, the bracket 106 comprises a circuit board support portion 117. To facilitate positioning and holding the circuit board 108 in the circuit board support portion 117, a mounting stud may be disposed to protrude from the top portion of the bracket 106. The mounting stud may be inserted in a mounting hole of the circuit board 108, wherein the mounting holes are one-to-one plug-in fitted with the mounting studs. In this example, the mounting stud may comprise a supporting part and a limiting part. The supporting part has an aperture larger than that of the mounting hole to support the bottom portion of the circuit board 108. The limiting part is protrudingly disposed on the supporting part and extends into the mounting hole to thereby enable the circuit board 108 to be positioned and mounted. The limiting part may be a circular column. It may be understood that the "top portion" of the bracket 106 is opposite to the "bottom portion" thereof. The "top portion" of the bracket 106 is provided with the circuit board support portion 117.

To facilitate manufacturing and insulation, the bracket 106 may be for example formed by injection molding. More specifically, the bracket 106 is an insert injection molded part to wrap and seal part of the connection members 110.

Specific shapes of the circuit board 108 may be selected according to application needs. In this example, the circuit board 108 is substantially strip plate-shaped. To facilitate enabling an electrical connection with a press-fit terminal 120 of the connection member 110, the circuit board 108 is provided with a press-fit through-hole 118. The number and distribution of the press-fit through-holes 118 are only required to satisfy a corresponding connection requirement. The specification and number of the press-fit through-holes 118 may be selected according to the requirement for connecting and mating with the corresponding press-fit terminals 120.

The assembling of the connection board modules 102 to form the modular connection board 100 or the connection module 101 will now be explained with reference to Figs. 1 to 10. Hereby, Fig. 8 shows a schematic perspective view of a top portion of the connection module 101, which is formed by fixing circuit boards 108 to each of the connection board modules 102 of the modular connection board 100, and Fig. 9 shows a schematic perspective view of a bottom side of the connection module 101. Fig. 10 shows an enlarged schematic top view of the interface 104 after assembly between the connection board modules 102(1) and 102(2) as an exemplary interface 104 provided between each two adjacent connection board modules 102.

As illustrated in Figs. 1 to 10 the connection board modules 102(1) to 102(4) can be plunged together along short side edges (second side edges) 126a and 126b of the bracket 106, which extend along a diagonal direction 128 (second direction) being substantially diagonal to the longitudinal direction 122, so that the interface 104 is formed between each two adjacent connection board modules 102 by the short side edges 126a and 126b of the brackets 106 of the corresponding connection board modules 102. As especially shown in Fig. 2, in this example the short side edge 126b of the bracket 106 of the connection board module 102(1) and the short side edge 126a of the bracket 106 of the connection board module 102(1) form the interface 104 between the connection board modules 102(1) and 102(2), the short side edge 126b of the bracket 106 of the connection board module 102(2) and the short side edge 126a of the bracket 106 of the connection board module 102(3) form the interface 104 between the connection board modules 102(2) and 102(3), and the short side edge 126b of the bracket 106 of the connection board module 102(3) and the short side edge 126a of the bracket 106 of the connection board module 102(4) form the interface 104 between the connection board modules 102(3) and 102(4).

To fasten the connection board modules 102(1) to 102(4) with each other, dovetail joints 130 are provided along the interface 104 between each two adjacent connection board modules 102. The specific number of dovetail joints at the interface may be selected according to application needs. As illustrated in Figs. 1 to 10, for this purpose tails 132 and corresponding sockets 134 of the dovetail joint are distributed along the short side edges 126a and 126b of the bracket 106 to form the dovetail joints 130 when the connection board modules 102(1) to 102(4) are joined with each other. In the shown example, one tail 132 and one socket 134 are provided at opposite sides of the short side edges 126a and 126b of the bracket 106. The tails 132 may have a trapezoidal shape and/or may be tapered towards the front end. Alternatively or in addition, the tails 132 may have a circular shape like a puzzle joint. The sockets 134 of the dovetail joint have a corresponding form, which allows to interlock the tails 132 with the corresponding sockets 134 when joining the connection board modules 102 to assemble the modular connection board 100.

In the assembly process, the tail 132 and the socket 134 provided at the short side edges 126a of the connection board modules 102 are interlocked with the corresponding socket 134 and the corresponding tail 132 provided at the short side edges 126b of the joining connection board modules 102 by engaging the tails 132 and the corresponding sockets 134 along the longitudinal direction 122 to form the dovetail joints 130 (see Fig. 10). Accordingly, the dovetail joints 130 prevent a movement of the connection board modules 102 after the assembly has been completed. In addition to the mechanical engaging, the dovetail joints 130 may be glued in the assembly process in order to enhance the durability of the joint between the adjacent connection board modules 102.

While in the illustrated example two dovetail joints 130 are provided at the outer end regions of the interface 104, dovetail joints may be, in addition or as an alternative, arranged in a middle region of the interface 104, which, for example, extends between the two rows 125a and 125b of connection members 110. Furthermore, while in the illustrated example each dovetail joint 130 comprises one tail 132 and one corresponding socket 134, each dovetail joint may also comprise a plurality of tails 132 and corresponding sockets 134 arranged in an array. By the dovetail joints 130, it may be possible to allow the individual connection board modules 102 to slightly shift at the interfaces 104 with respect to each other, in order to compensate dimensional tolerances which can be introduced due to, for example, manufacturing dimensional errors of the plurality of unit battery cells, or mounting errors of the plurality of unit battery cells.

Furthermore, as an alternative to the dovetail joints 130, a hinge based joint (not shown) may be provided, which allows an assembly of the modular connection boards along the diagonal direction 128, i.e in a direction along which the interface 104 extends. With the hinge-based joint, the connection board modules 102 may be assembled by fitting pins, which extend parallel to the interface 104 in the diagonal direction 128 into corresponding hollow cylinders (also signified as knuckles) both provided at the short side edges 126a and 126b of the bracket 106 in analogy to the tail 132 and the socket 134 of the dovetail joint 130 described above. By using the hinge based joints, it may be possible to allow the individual connection board modules 102 to slightly rotate around the interfaces 104 after assembly, in order to compensate dimensional tolerances which can be introduced due to, for example, manufacturing dimensional errors of the plurality of unit battery cells, or mounting errors of the plurality of unit battery cells.

As a further alternative, it is also possible to use chain-based joints instead of the dovetail joints 130, wherein a plurality of chain links are provided at the short side edges 126a and 126b of the bracket 106 in analogy to the tail 132 and the socket 134 of the dovetail joint 130 described above. For joining adjacent connection board modules 102 with each other, the chain links provided at the short side edges 126a of the bracket 106 of a certain connection board module 102 may be joined with corresponding chain links provided at the short side edges 126b of the bracket of an adjacent connection board module 102, for example by clicking the chain links to form the chain-based joint at the interface 104. Accordingly, the chain-based joint also allows an assembling of the connection board modules 102 in the longitudinal direction, and may allow a tolerance compensation as described above.

Instead of using only one type of linkage, it is also possible that the adjacent connection board modules 102 are joined at the interface 104 by any combination of dovetail joints 130, hinge-based joints and chain-based joints or other suitable joints.

To provide a space-saving solution, the short side edges 126a and 126b, which form the interface between the adjacent connection board modules 102, are asymmetrically shaped. More specifically, the short side edges 126a and 126b, which form the interface between the adjacent connection board modules 102, have a stepped form. In particular, the short side edges 126a comprise a protruding region 136a, which at least extends along an edge of the first row 125a of connection members 110 on the bracket 106, and a recessed region 138a, which at least extends along an edge of the second row 125b of connection members 110 on the bracket 106. In the shown example, the recessed region 138a further extends along an edge of the circuit board support portion 117. The short side edge 126b comprises a protruding region 136b, which at least extends along an edge of the second row 125b of connection members 110 on the bracket 106, and a recessed region 138b, which at least extends along an edge of the first row 125a of connection members 110 on the bracket 106. In the shown example, the protruding region 136b further extends along an edge of the circuit board support portion 117 and provides space for mounting a board-to-board connector 148 (described below) on the bracket 106.

Accordingly, at the interface 104, the protruding region 136a of the short side edge 126a faces the recessed region 138b of the short side edge 126b, and the recessed region 138a of the short side edge 126a faces the protruding region 136b of the short side edge 126b. Hence, when the connection board modules 102 are assembled to form the modular connection board 100, the protruding region 136a and the recessed region 138b mate with each other, and the protruding region 136b and the recessed region 138a mate with each other.

The protruding region 136a and the recessed region 138a are separated by an offset 140a, which extends substantially across the extension direction of the interface 104, i.e. substantially parallel to the pair of first side edges 124a and 124b. Similar, the protruding region 136b and the recessed region 138b are separated by an offset 140b, which extends substantially across the extension direction of the interface 104, i.e. substantially parallel to the pair of first side edges 124a and 124b. The size of the offsets 140a and 140b approximately equals the width of the unit battery cells in the longitudinal direction 122. As a result, the electrode terminals of a unit battery cell arranged at the interface 104 is electrically connected to a connection member 110 provided in the first row 125a of connection members 110 of one of the two adjacent connection board modules 102 and is electrically connected to a connection member 110 provided in the second row 125b of connection members 110 of the other one of the two adjacent connection board modules 102. For example, the electrode terminals of the unit battery cell, which is arranged at the interface 104 provided between the connection board modules 102(1) and 102(2), is electrically connected to a connection member 110 of the first row of connection members 110 of the connection board module 102(2) and to a connection member 110 of the second row of connection members 110 of the connection board module 102(1).

In other words, in the assembled modular connection board 100, the first row 125a of connection members 110 is offset with respect to the second row 125b of connection members 110 by a length, which is substantially equal to a width of the unit battery cells in the longitudinal direction 122. In this manner, there is provided space for mounting connection members 110', which are adapted to connect the high potential side and the low potential side of the battery module to an electrical consumer like a load or to a charger, on the terminating connection board module 102(1) and 102(4). Accordingly, it is possible to make the short side edge 126a of the front side connection board module 102(1), which corresponds to a front side edge of the modular connection board 100, and the short side edge 126b of the end side connection board module 102(4), which corresponds to an end side edge of the modular connection board 100, is a substantially straight surface, flush with the battery module or battery string, to which the modular connection board 100 is attached.

In this respect, it is understandable that in the shown example the connection board modules 102, which are arranged at the end faces of the modular connection board 100, namely the front side connection board module 102(1) and the end side connection board module 102(4) in the shown example, form the interface 104 with only one adjacent connection board module 102 and accordingly have a different outer appearance shape than the inner connection board modules, namely the second connection board module 102(2) and the third connection board module 102(3), which form the interface 104 with two adjacent connection board modules 102.

An exploded view of the assembled first connection board module 102(1) is shown in Fig. 7. In the illustrated example one connection member 110', which is adapted to electrically connect the battery module to the electrical consumer or the charger, and twelve connection members 110, which are adapted to electrically connected the electrode terminals of the unit battery cells, are mounted into the mounting grooves 112. Accordingly, with the first connection board module 102(1), it is possible to electrically connect twelve unit battery cells in series. As apparent from Figs. 2 to 6, also on the other connection board modules 102(2), 102(3) and 102(4), twelve connection members 110 are mounted in two rows in the same manner as on the first connection board module 102(1), so that each of the connection board modules 102(2), 102(3) and 102(4) also electrically connects twelve unit battery cells in series. Accordingly, with the modular connection assembly 101 formed by the assembled modular connection board 100 altogether 48 unit battery cells can be electrically connected in series to form a battery module or battery string.

Of course, the number of connection members 110 provided on each of the connection board modules 102 is not restricted to twelve, but may be varied according to application needs, in order to change the number of unit battery cells, which shall be electrically connected in series and/or in parallel with the same modular connection board 100. Furthermore, it is not essential that the same number of connection members 110 is mounted to each of the connection board modules 102, which are assembled to form the modular connection board 100, but according to application needs, the number of mounting grooves 112 and mounted connection members 110 may vary individually between the connection board modules 102.

As described above, the connection members 110 are mounted on the bracket 106 of the individual connection board modules 102 and may be connected with unit battery cells to transmit corresponding current, voltage and electric signals to the circuit board 108. The connection members 110 may be just a structure for transmitting current. In this embodiment, to stably transmit a relatively large current outputted by the unit battery cells, the connection members 110 may be bus-bars. The connection members 110 are electrically connected with the circuit board 108 supported in the circuit board supporting portion 117 and may be electrically connected to the unit battery cells to conduct current to the circuit board 108. The connection members 110 adopt a first metal material structure; i.e., the connection members 110 are made of a first metal. Exemplarily, each connection member 110 is an aluminum integral element, i.e., an integral element of an aluminum structure. In the illustrated example, the connection members 110 comprise a connection member body 142 and a connection member end portion 144. The connection member body 142 is received within the mounting groove 112. The connection member body 142 is snap-fitted with the snap joint 116, i.e., stop-fitted along a vertical direction from the bottom portion to the top portion of the bracket 106 (see Fig. 10). The connection member body 142 is substantially rectangular plate-shaped, and an elongated groove (not shown) is provided along a middle portion of the rectangular plate. The connection member body 142 extends along the longitudinal direction 122. To facilitate welding to the battery cell, two welding through-holes may be provided in the connection member body 142. The connection member end portion 144 is protrudingly disposed on the connection member body 142. The connection member end portion 144 is substantially L-shaped.

To conveniently and quickly enable an electrical connection between the connection member 110 and the circuit board 108, the connection board modules 102 comprise press-fit terminals 120. The press-fit terminal 120 comprises a connection end and a press-fit end. The connection end of the press-fit terminal 120 is electrically connected with the connection member 110, and the press-fit end is press-fitted with the circuit board 108 to establish a contact electrical connection therebetween. In the illustrated example, the press-fit terminal 120 is substantially L-shaped. The press-fit end of the press-fit terminal 120 extends into a press-fit through-hole 118 of the circuit board 108 and protrudes from the press-fit through-hole 118 (see e.g. Fig. 10). In the illustrated example, the press-fit end of the press-fit terminal 120 is arranged to abut against the press-fit through-hole 118. When being assembled, the press-fit through-hole 118 of the circuit board 108 may be press-fitted with the press-fit end of the press-fit terminal 120. Upon completion of the press-fit, the press-fit terminal 120 may directly contact the circuit board 108 to establish an electrical connection therewith. Further, the press-fit end of the press-fit terminal 120 may be in welding (e.g., wave-soldering) connection with a welding face (i.e., a top face in the figure) of the circuit board 108. The press-fit terminal 120 is a second metal material structure, e.g., second metal made. The second metal material is a different metal material from the first metal material. Specifically, the press-fit terminal 120 is a copper structure to maintain the same copper material as that of the circuit board 108 so as to facilitate a secure welding connection. In this embodiment, the press-fit terminal 120 has a connection body (not shown). Two ends of the connection body are connected with the press-fit end and the connection end, respectively. To facilitate space utilization, the connection body is L-shaped. As shown in Fig. 10, the press-fit terminal 120 is press-fitted with some of the press-fit through-holes 118 to thereby implement an electrical connection with the circuit board 108.

To enable the press-fit terminal 120 to securely and long-lively connect with the connection member 110, the connection module 101 may further comprise a switching connection stud (not shown). The switching connection stud is arranged for switching between different metal materials. In the illustrated example, the switching connection stud adopts the first metal material identical to that of the connection members 110. The switching connection stud is electrically connected with the connection member 110. Specifically, a top end of the switching connection stud is electrically connected with the connection member end portion 144. For example, the top end of the switching connection stud may be laser welded to the connection member end portion 144 of the connection member 110. A bottom end of the switching connection stud is electrically connected with the press-fit end of the press-fit terminal 120.

As shown in Fig. 7, a plurality of thermal pads 146 may be provided on each connection board module 102 in a manner that the thermal pads 146 can be brought in thermal contact with the unit battery cells, to which the connection board module 102 is attached, wherein the number of thermal pads per connection board module may be selected according to application needs. The use of the thermal pads 146 allows to dissipate heat generated in the unit battery cells and accordingly to prevent overheating of the unit battery cells.

To implement monitoring corresponding parameters of the corresponding unit battery cells, the connection board module further comprises detection elements (not shown), which are mounted on the connection members 110. Specific specification and kinds of the detection elements may be selected according to detection needs. In this example, each detection element comprises a temperature sensor, which is configured to detect a temperature of the corresponding connection member 110. The temperature sensor may be a thermistor, for example a negative temperature coefficient (NTC) thermal resistance sensor. However, also other kinds of temperature sensors known in the art are possible. To be capable of detecting a voltage of the corresponding connection member 110, the detection element further comprises a voltage detection element. The voltage detection element may be for example a resistance. As an alternative, two detection elements may be mounted on each connection member 110, wherein one of the two detection elements may include a temperature detection element and the other may include a voltage detection element.

After mounting of the circuit boards 108 to the connection board modules 102 to form the connection module 101, the detection elements are electrically connected with the corresponding circuit board 108 to transmit the detected detection signal to the corresponding circuit board 108. The circuit boards 108 are electrically connected to a central controller of the battery module or battery string, to which the connection module 101 is attached, to transmit the detected detection signal to the central controller. The central controller may be for example a battery management system or may be a vehicle ECU. The central controller may be a dedicated control unit, which monitors the states of only the unit battery cells, to which the connection module 101 is attached, or may be a control unit, which monitors the states of the unit battery cells of a plurality of battery modules or battery strings.

For transmitting the detected detection signals to the central controller, the circuit boards 108 are electrically connected in a daisy-chain configuration by interconnecting the circuit boards 108 with board-to-board connectors 148, which are provided at the interface 104. For allowing communication of the interconnected circuit boards 108 with the central controller of the battery module or battery string, an input/output connector (I/O connector) 150 is mounted to one of the connection board modules 102, preferably to the connection board modules 102(4), which is arranged at the end face of the modular connection board 100. The I/O connector 150 may be connected to a connector of the central controller via a connection cable for data transmission. Since the circuit boards 108 are directly interconnected by the board-to-board connectors 148 in the daisy-chain configuration, it is only necessary to provide a connection cable between the I/O connector 150 and the connector of the central controller of the battery module or battery string, so that a complicated wiring for connecting the circuit boards 108 can be avoided.

The circuit boards 108 can be interconnected with a centralized communication structure, where the central controller has all the monitoring functions for the unit battery cells of the battery module or battery string, or a decentralized communication structure, where at least a part of the monitoring functions is taken over by the circuitry mounted on each of the circuit boards 108.

The centralized communication structure is illustrated in Figs. 1 to 10. Since in the centralized communication structure, the monitoring is performed by the central controller external to the connection module 101, the printed circuit boards 108 mounted on each connection board module 102 are configured to transmit the detected detection signals to the central controller and are arranged in a cascading structure. This means that depending on their position in the connection module 101, the circuit boards 108 have a function of electrically connecting the connection members with the board-to-board connector 148 arranged on the corresponding connection board module 102, and optionally also to electrically connect the two board-to-board connectors, to which the circuit board is electrically connected, with each other.

In the shown example of Figs. 1 to 10, for example on the first connection board module 102(1) a printed circuit board 108(1) is mounted, which has conducting lines, for example formed by copper traces, for electrically connecting the detection elements of the connection members 110 mounted to the first connection board module 102(1) to the board-to-board connector 148(1) arranged at the interface 104 between the connection board module 102(1) and 102(2). Similar, on the second connection board module 102(2) a printed circuit board 108(2) is mounted, which has conducting lines for electrically connecting the detection elements of the connection members 110 mounted to the second connection board module 102(2) to the board-to-board connector 148(2) arranged at the interface 104 between the connection board module 102(2) and 102(3). In addition, the printed circuit board 108(2) has conducting lines for electrically connecting the board-to-board connector 148(1) to the board-to-board connector 148(2).

Similar, on the third connection board module 102(3) a printed circuit board 108(3) is mounted, which has conducting lines for electrically connecting the detection elements of the connection members 110 mounted to the third connection board module 102(3) to the board-to-board connector 148(3) arranged at the interface 104 between the connection board module 102(3) and 102(4). In addition, the printed circuit board 108(3) has conducting lines for electrically connecting the board-to-board connector 148(2) to the board-to-board connector 148(3). On the fourth connection board module 102(4) a printed circuit board 108(4) is mounted, which has conducting lines for electrically connecting the detection elements of the connection members 110 mounted to the fourth connection board module 102(4) to the I/O connector 150. In addition, the printed circuit board 108(4) mounted on the fourth connection board module 102(4) has conducting lines for electrically connecting the board-to-board connector 148(3) to the I/O connector 150.

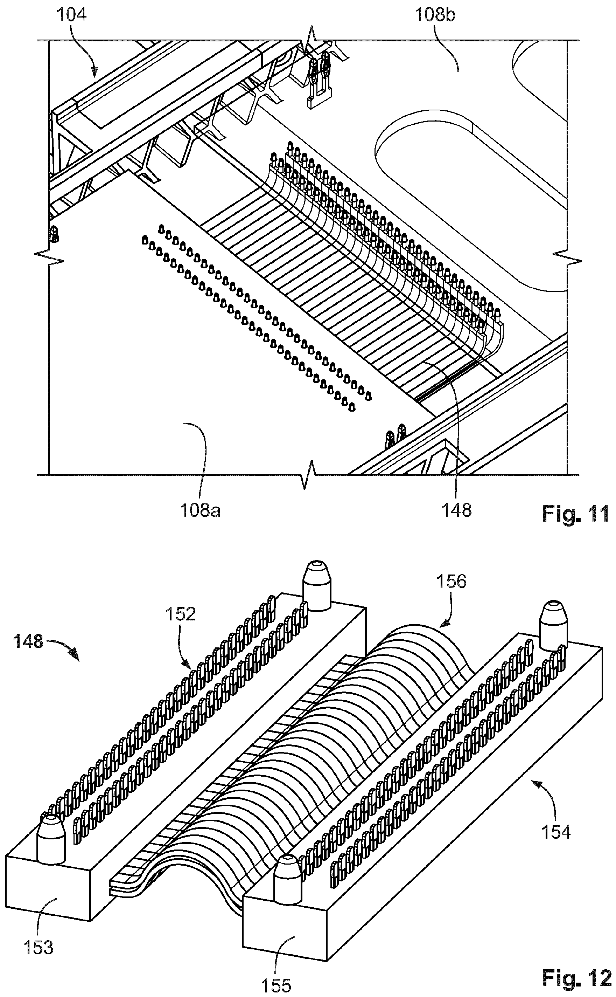

To allow tolerance compensation between the circuit boards 108, the board-to-board connectors 148 may be flexible board to board connectors as for example shown in Figs. 11 and 12. Hereby, Fig. 11 shows an exemplary interface 104, which may be provided between two of the connection board modules 102. An exemplary flexible board-to-board connector 148 connects the printed circuit boards 108a and 108b, which are examples of any of the circuit boards 108 of the assembled connection module 101. As shown in Fig. 12, the exemplary flexible board-to-board connector 148 comprises a first array of pins 152, in this example arranged in two rows of pins and provided within a first socket 153, which serves as a first contact interface for electrically connecting circuit board 108a and a second array of pins 154, in this example arranged in two rows of pins and provided within a second socket 155, which serves as a second contact interface for electrically connecting circuit board 108b. The first array of pins 152 and the second array of pins 154 are electrically connected by flexible flat cables 156. By the flexibility of the flexible flat cables 156, it is enabled that dimensional tolerances which can be introduced due to, for example, manufacturing dimensional errors of circuit boards 108, or mounting errors of the plurality of the circuit boards 108 can be compensated. Furthermore, it can be prevented that shocks or vibrations, which may be induced by external impacts are transmitted between the circuit boards 108.

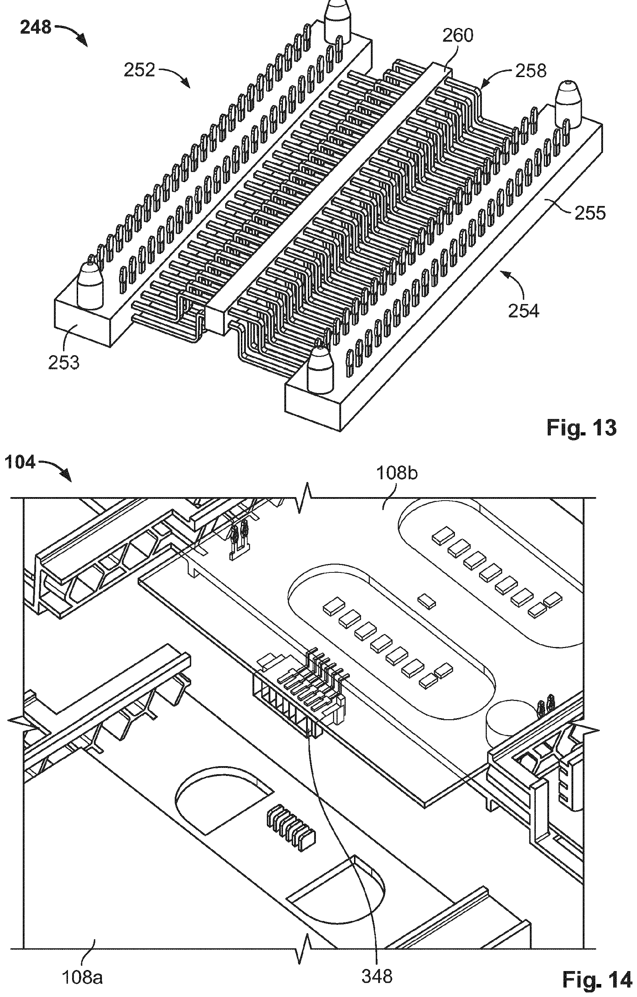

On the other hand, there may be application scenarios, in which a rigid connection between the circuit boards 108 is preferable. In such applications, at the interface 104 a rigid board-to-board connector 248 comprising rigid conductors arranged in a lead-frame, as shown in Fig. 13, may be used instead of the flexible board-to-board connector 148. Rigid board-to-board connector 248 comprises a first array of pins 252, in this example arranged in two rows of pins and provided within a first socket 253, which serves as a first contact interface for electrically connecting printed circuit board 108a, and a second array of pins 254, in this example arranged in two rows of pins within a second socket 255, which serves as a second contact interface for electrically connecting printed circuit board 108b. The first array of pins 252 and the second array of pins 254 are electrically connected by rigid conductors 258, which may be for example formed of rigid copper wires and may be hold in form by additional frame element 260. By the rigidity of the rigid board-to-board connector 248, the mechanical connection stability between interconnected printed circuit boards 108a and 108b can be further enhanced.

To enable a simple assembly and a stable electric connection, the circuit boards 108 may be pressed-in to the first and second contact interfaces of the board-to-board connectors 148 or of the board-to-board connectors 248 via a press-fit connection. Alternatively, the circuit boards 108 may be soldered or brazed to the first and second contact interfaces of the board-to-board connectors 148 or of the board-to-board connectors 248. Of course, also other known technics for joining the circuit boards 108 to the first and second contact interfaces may be used instead.

The number of pins of the first and second contact interfaces of the board-to-board connectors 148 or of the board-to-board connectors 248 may be chosen according to application scenarios. Referring back to Figs. 2 to 9, it is apparent that a number of pins of the first and second contact interfaces of the board-to-board connectors 148 or of the board-to-board connectors 248 may vary between the interfaces 104 due to the cascading connection structure. For example, in the illustrated configuration, the first and second contact interfaces of the board-to-board connector 148(1) may have 16 pins for transmitting the voltage and temperature detection signals for each of the twelve unit battery cells, to which the first connection board module 102(1) is attached. Since the board-to-board connector 148(2) transmits the detection signals for each of the twelve unit battery cells, to which the second connection board module 102(2) is attached and in addition transmits the voltage and temperature detection signals received from the first connection board module 102(1) via the board-to-board connector 148(1), the first and second contact interfaces of the board-to-board connector 148(2) may have 32 pins. For the same reason, the first and second contact interfaces of the board-to-board connector 148(3) may have 48 pins. The I/O connector 150 accordingly may have 64 pins, for transmitting the detection signals from all the unit battery cells to which the connection module 101 formed of the connection board modules 102(1) to 102(4) is attached. It is however also possible to use, at each interface 104, board-to-board connectors 148 or 248, which have the same amount of pins, and to connect only the necessary number of pins to the corresponding circuit boards 108.

To further simplify the assembling of the connection board modules 102, the sockets of the first contact surface and of the second contact surface of the board-to-board connectors 148 or 248 may be provided on the bracket 106 of a single connection board module 102 at the interface 104, as it is shown in Figs. 2 to 7.

In the decentralized communication structure, the printed circuit boards do not only comprise conducting lines for electrically connecting the detection circuits of the connection members 110, but may further be equipped with circuitry for monitoring the unit battery cells, to which the corresponding connection board module 102 is attached. For example, a board controller may be mounted, for example by welding or soldering, to each of the circuit boards 108. The board controller, which may be also signified as cell supervision circuit or cell monitoring circuit, can comprise circuitry for determining the voltage and/or temperature of the unit battery cells, to which the corresponding connection board module 102 is attached. Furthermore, balancing resistors may be mounted on the circuit boards 108, and the board controller may comprise circuitry, which allows to discharge the unit battery cells, to which the corresponding connection board module 102 is attached, through the balancing resistors for balancing the charges of the unit battery cells. In this manner, with the decentralized communication structure, the monitoring functions of the central controller of the battery module or battery string can be transferred to the individual board controllers mounted on the circuit boards 108. Accordingly, for example a granularity of the measurement of the voltage or temperature and of the charge balancing can be enhanced for the unit battery cells and the complexity of the central controller can be reduced. Of course, it is also possible to transfer different monitoring functions from the central controller to the circuit boards 108 in accordance with application needs.

In the decentralized communication structure, the detected detection signals are transmitted from the detection elements to the board controllers mounted on the corresponding circuit boards 108. The board-to-board connectors mounted on each circuit board 108 are in communication with the central controller of the battery module or battery string and may exchange either analog or digital signals with the central controller. In this manner, the need for transmitting the detection signals for all unit battery cells is dispensed, so that it is possible to simplify the structure of the board-to-board connector used for interconnecting the circuit boards 108. As shown in Fig. 14, at the interface 104, for example a plug-in quick connector 348 may be provided, which may have 6 to 12 connection pins depending on the position of the connection board module 102 in the daisy-chain configuration. The mating connecting parts of the plug-in quick connector 348 may be either mounted to the connected circuit boards 108 or on the brackets 106 of the connection board module 102, to which the connected circuit boards 108 are fixed.

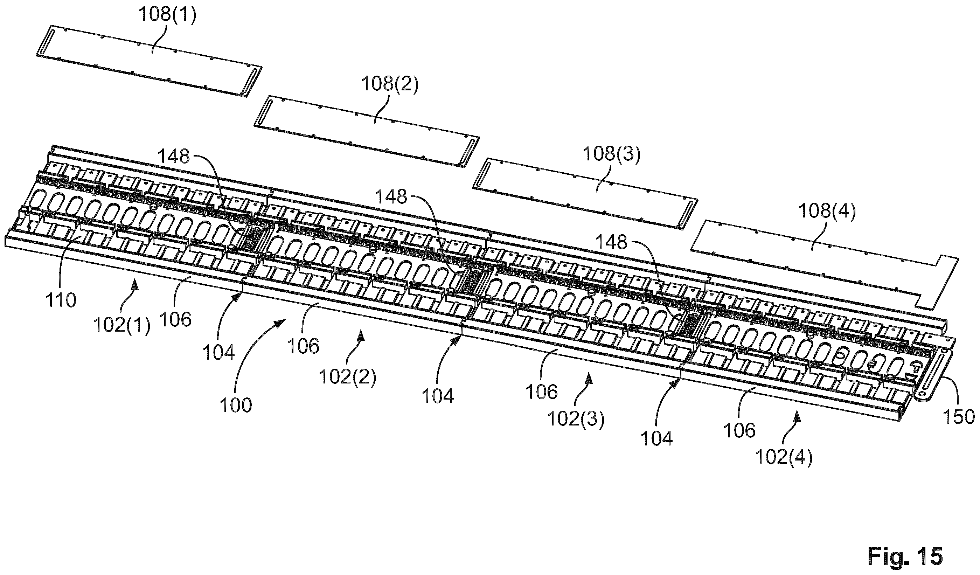

Fig. 15 shows a schematic perspective view of the exemplary modular connection board 100 before fixing the circuit boards 108. In the shown example, in a first assembling step the connection bard modules 102(1) to 102(4) are joined at the interfaces 104 to form the modular connection board 100. After joining the connection board modules 102(1) to 102(4), in a second assembling step the printed circuit boards 108(1) to 108(4) are mounted to the corresponding connection board modules 102(1) to 102(4) via the press-fit connections described above to form the modular connection assembly 101.

In summary, the present invention provides a modular connection board 100, which is formed by joining separately arranged connection board modules 102, each being electrically connectable to a part of the unit battery cells of a battery module or battery string. Hereby, the modular connection board 100 may be provided in form of the separately arranged connection board modules 102 or may be provided as the assembled modular connection board 100, with the connection board modules 102 being interlinked with each other. Furthermore, as outlined above printed circuit boards 108 can be mounted to the connection board modules 102 before or after the assembly of the modular connection board 100, in order to form the modular connection assembly 101.

While the present disclosure has been illustrated for the example of prismatic unit battery cells, the present disclosure can be also applied to other shapes of unit battery cells, and the configuration of the connection board modules 102 can be adapted to the shapes of the unit battery cells.

Furthermore, while press-fitting has been described as a method for fixing the circuit boards 108 to the connection board modules 102, the circuit boards 108 may be alternatively also mounted to the connection board modules 102 by screwing or other known mounting methods.

**REFERENCE NUMERALS**

| | |
|---|---|
| 100 | Modular connection board |
| 101 | Modular connection assembly |
| 102 | Connection board modules |
| 104 | Interface |
| 106 | Bracket |
| 108 | Circuit boards |
| 110 | Connection members |
| 112 | Mounting grooves |
| 114 | Bottom through-hole |
| 116 | Snap joint |
| 117 | Circuit board support portion |
| 118 | Press-fit through-hole |
| 120 | Press-fit terminal |
| 122 | Longitudinal direction |
| 124a, 124b | Long side edges of the bracket |
| 125a, 125b | Rows of connection members |
| 126a, 126b | Short side edges of the bracket |
| 128 | Diagonal direction |
| 130 | Dovetail joints |
| 132 | Tail of the dovetail joints |
| 134 | Socket of the dovetail joints |
| 136a, 136b | Protruding region |
| 138a, 138b | Recessed region |
| 140a, 140b | Offset |
| 142 | Connection member body |
| 144 | Connection member end portion |
| 146 | Thermal pads |
| 148 | Board-to-board connectors |
| 150 | Input/output connector |
| 152, 154, 252, 254 | Arrays of board-to-board connector pins |
| 153, 155, 253, 255 | Board-to-board connector sockets |
| 156 | Flexible flat cables |
| 258 | Rigid conductors |
| 260 | Frame element |
| 348 | Plug-in quick connector |

## Claims

1. A modular connection board (100), which is configured to be attached to a group of electricity storage elements each including electrode terminals, the modular connection board (100) comprising:
at least two connection board modules (102), each of the at least two connection board modules (102) comprising:
a bracket (106) including a plurality of connection member mounting portions (112), which are arranged to form a first row (125a) along one of a pair of first side edges of the connection board module (102), and to form a second row (125b) along the other one of the pair of first side edges of the connection board module (100), wherein the pair of first side edges of the connection board module extends in a first direction (122);
a plurality of connection members (110), which are mounted in the plurality of connection member mounting portions (112), for connecting the electrode terminals of adjacent electricity storage elements to each other; and
a circuit board supporting portion (117), which is arranged on the bracket (106) and configured to receive a circuit board (108), wherein at least one holding element (120) is arranged in the circuit board supporting portion, which is configured to hold the circuit board by a press-fit connection;
wherein between each two adjacent connection board modules (102) an interface (104) is provided, which extends in a second direction (128) different from the first direction (122), and which comprises at least one joint (130) for joining the two adjacent connection board modules (102) with each other.

2. The modular connection board (100) according to claim 1, wherein the at least two connection board modules (102) are joined with each other at the interface (104) between each two adjacent connection board modules (102).

3. The modular connection board (100) according to claim 1 or 2, wherein the interface (104) between each two adjacent connection board modules (102) comprises at least two joints (130) provided at opposite sides along the interface (104).

4. The modular connection board (100) according to one of claims 1 to 3, wherein the at least one joint (130) is one of a dovetail joint, a hinge-based joint and a chain-based joint.

5. The modular connection board (100) according to one of claims 1 to **4,** wherein the interface (104) comprises a first interface region (136a, 138b), which extends between the first row of connection members (110), and a second interface region (136b, 138a), which extends between the second row of connection members (110), and wherein the first interface region (136a, 138b) is displaced with respect to the second interface region (136b, 138a) in the first direction (122), so that an electricity storage element arranged at the interface (104) is electrically connected to respectively one connection member (110) of each of the two adjacent connection board modules (102).

6. The modular connection board (100) according to one of claims 1 to 5, wherein an electronic connector (148, 248, 348) is provided at the interface between each two adjacent connection board modules (102), and wherein the electronic connector comprises a first contact interface for electrically connecting a first circuit board (108a) supportable on one of the two adjacent connection board modules (102) to the electronic connector (148, 248, 348) and a second contact interface for electrically connecting a second circuit board (108b), supportable on the other one of the two adjacent connection board modules (102), to the electronic connector (148, 248, 348).

7. The modular connection board (100) according to claim 6, wherein the first contact interface and the second contact interface are electrically connected by flexible flat conductors (156).

8. The modular connection board (100) according to one of claims 6 or 7, wherein a socket (153, 253) of the first contact interface and a socket (155, 255) of the second contact interface are mounted on a same one of the two adjacent connection board modules (102).

9. A modular connection assembly (101) comprising the modular connection board (100) according to any of the preceding claims, wherein each of the at least two connection board modules (102) further comprises a circuit board (108) being fixed in the circuit board supporting portion (117) via the press-fit connection.

10. The modular connection assembly (101) according to claim 9, wherein the circuit board (108) comprises a plurality of press-fit through-holes (118), and wherein each of the connection members (110) is electrically connected to the corresponding circuit board through a press fit terminal (120), the press fit terminal (120) comprising:
a connection end, which is electrically connected to the connection member (110); and
a press fit end, which extends into at least a part of one of the plurality of press fit holes (120) provided on the circuit board (108) and is electrically connected with the circuit board (108).

11. The modular connection assembly (101) according to claim 9 or 10, wherein each circuit board (108) comprises circuitry for measuring a state, including at least one of a voltage or a temperature, and optionally circuitry for balancing a charge of those electricity storage elements, to which the connection board module (102), which supports the respective circuit board (108), is attached.

12. A method for connecting a modular connection board (100) to a group of electricity storage elements each including electrode terminals, the method comprising:
providing at least two connection board modules (102), each of the at least two connection board modules (102) comprising:
a bracket (106) including a plurality of connection member mounting portions (112), which are arranged to form a first row (125a) along one of a pair of first side edges of the connection board module, and to form a second row (125b) along the other one of the pair of first side edges of the connection board module (102), wherein the pair of first side edges of the connection board module extends in a first direction (122);
a plurality of connection members (110), which are mounted in the plurality of connection member mounting portions (112), for connecting the electrode terminals of adjacent electricity storage elements to each other; and
a circuit board supporting portion (117), which is arranged on the bracket (106) and configured to receive a circuit board (106), wherein at least one holding element (120) is arranged in the circuit board supporting portion (117), which is configured to hold the circuit board (108) by a press-fit connection;
joining each two adjacent connection board modules (102) with each other by at least one joint (130) of an interface (104), which extends in a second direction (128) different from the first direction (122);
attaching the modular connection board (100) to the group of electricity storage elements.

13. The method according to claim 12, wherein the two adjacent connection board modules (102) are joined with each other by assembling the two adjacent connection board modules (102) along the first direction (122).

14. The method according to claim 12, wherein the two adjacent connection board modules (102) are joined with each other by assembling the two adjacent connection board modules (102) along a direction diagonal to the first direction (122).

15. The method according to one of claims 12 to 14, further comprising
mounting a circuit board (108) in the circuit board supporting portion (117) of each of the at least two connection board modules (102) via the press-fit connection.

## Patentansprüche

1. Modulare Anschlussplatte (100), die so konfiguriert ist, dass sie an einer Gruppe von Elektrizitätsspeicherelementen angebracht werden kann, die jeweils Elektrodenanschlüsse enthalten, wobei die modulare Anschlussplatte (100) aufweist:
mindestens zwei Anschlussplattenmodule (102), wobei jedes der mindestens zwei Anschlussplattenmodule (102) aufweist:
eine Halterung (106) mit einer Vielzahl von Verbindungselement-Befestigungsabschnitten (112), die so angeordnet sind, dass sie eine erste Reihe (125a) entlang einer eines Paars von ersten Seitenkanten des Anschlussplattenmoduls (102) bilden und eine zweite Reihe (125b) entlang der anderen des Paars von ersten Seitenkanten des Anschlussplattenmoduls (100) bilden, wobei sich das Paar von ersten Seitenkanten des Anschlussplattenmoduls in einer ersten Richtung (122) erstreckt;
eine Vielzahl von Verbindungselementen (110), die in der Vielzahl von Verbindungselement-Befestigungsabschnitten (112) angebracht sind, um die Elektrodenanschlüsse von benachbarten Elektrizitätsspeicherelementen miteinander zu verbinden; und
einen Schaltungsplattentragabschnitt (117), der an der Halterung (106) angeordnet und zur Aufnahme einer Schaltungsplatine (108) ausgebildet ist, wobei in dem Schaltungsplattentragabschnitt mindestens ein Halteelement (120) angeordnet ist, das zum Halten der Schaltungsplatine durch eine Presspassverbindung ausgebildet ist;
wobei zwischen jeweils zwei benachbarten Anschlussplattenmodulen (102) eine Schnittstelle (104) vorgesehen ist, die sich in einer von der ersten Richtung (122) verschiedenen zweiten Richtung (128) erstreckt, und die mindestens ein Gelenk (130) zum Verbinden der beiden benachbarten Anschlussplattenmodulen (102) miteinander aufweist.

2. Modulare Anschlussplatte (100) nach Anspruch 1, wobei die mindestens zwei Anschlussplattenmodule (102) an der Schnittstelle (104) zwischen jeweils zwei benachbarten Anschlussplattenmodulen (102) miteinander verbunden sind.

3. Modulare Anschlussplatte (100) nach Anspruch 1 oder 2, wobei die Schnittstelle (104) zwischen jeweils zwei benachbarten Anschlussplattenmodulen (102) mindestens zwei Verbindungen (130) umfasst, die an gegenüberliegenden Seiten entlang der Schnittstelle (104) vorgesehen sind.

4. Modulare Anschlussplatte (100) nach einem der Ansprüche 1 bis 3, wobei die mindestens eine Verbindung (130) eine Schwalbenschwanzverbindung, eine scharnierbasierte Verbindung oder eine kettenbasierte Verbindung ist.

5. Modulare Anschlussplatte (100) nach einem der Ansprüche 1 bis **4,** wobei die Schnittstelle (104) einen ersten Schnittstellenbereich (136a, 138b), der sich zwischen der ersten Reihe von Verbindungselementen (110) erstreckt, und einen zweiten Schnittstellenbereich (136b, 138a) umfasst, der sich zwischen der zweiten Reihe von Verbindungselementen (110) erstreckt, und wobei der erste Schnittstellenbereich (136a, 138b) in Bezug auf den zweiten Schnittstellenbereich (136b, 138a) in der ersten Richtung (122) verschoben ist, so dass ein an der Schnittstelle (104) angeordnetes Elektrizitätsspeicherelement mit jeweils einem Verbindungselement (110) von jedem der beiden benachbarten Anschlussplattenmodule (102) elektrisch verbunden ist.

6. Modulare Anschlussplatte (100) nach einem der Ansprüche 1 bis 5, wobei an der Schnittstelle zwischen jeweils zwei benachbarten Anschlussplattenmodulen (102) ein elektronischer Verbinder (148, 248, 348) vorgesehen ist, und wobei der elektronische Verbinder eine erste Kontaktschnittstelle zur elektrischen Verbindung einer auf einem der beiden benachbarten Anschlussplatinenmodule (102) tragbaren ersten Leiterplatte (108a) mit dem elektronischen Verbinder (148, 248, 348) und eine zweite Kontaktschnittstelle zum elektrischen Verbinden einer zweiten Leiterplatte (108b), die auf dem anderen der beiden benachbarten Anschlussplattenmodulen (102) tragbar ist, mit dem elektronischen Verbinder (148, 248, 348).

7. Modulare Anschlussplatte (100) nach Anspruch 6, wobei die erste Kontaktschnittstelle und die zweite Kontaktschnittstelle durch flexible Flachleiter (156) elektrisch verbunden sind.

8. Modulare Anschlussplatte (100) nach einem der Ansprüche 6 oder 7, wobei eine Buchse (153, 253) der ersten Kontaktschnittstelle und eine Buchse (155, 255) der zweiten Kontaktschnittstelle auf demselben der beiden benachbarten Anschlussplattenmodule (102) montiert sind.

9. Modulare Anschlussbaugruppe (101), die die modulare Anschlussplatte (100) nach einem der vorhergehenden Ansprüche aufweist, wobei jedes der mindestens zwei Anschlussplattenmodule (102) ferner eine Leiterplatte (108) umfasst, die in dem Leiterplattentragabschnitt (117) über die Presspassverbindung befestigt ist.

10. Modulare Anschlussbaugruppe (101) nach Anspruch 9, wobei die Leiterplatte (108) eine Vielzahl von Durchgangslöchern (118) mit Presspassung aufweist, und wobei jedes der Verbindungselemente (110) mit der entsprechenden Leiterplatte durch einen Anschluss (120) mit Presspassung elektrisch verbunden ist, wobei der Anschluss (120) mit Presspassung Folgendes aufweist:
ein Verbindungsende, das elektrisch mit dem Verbindungselement (110) verbunden ist; und
ein Presspassungsende, das sich in mindestens einen Teil eines der Vielzahl von Presspassungslöchern (120) erstreckt, die auf der Leiterplatte (108) vorgesehen sind, und elektrisch mit der Leiterplatte (108) verbunden ist.

11. Modulare Anschlussbaugruppe (101) nach Anspruch 9 oder 10, wobei jede Leiterplatte (108) eine Schaltung zum Messen eines Zustands, einschließlich mindestens einer Spannung oder einer Temperatur, und optional eine Schaltung zum Ausgleichen einer Ladung derjenigen Stromspeicherelemente umfasst, an denen das Verbindungsplattenmodul (102), das die jeweilige Leiterplatte (108) trägt, befestigt ist.

12. Verfahren zum Verbinden einer modularen Anschlussplatte (100) mit einer Gruppe von Elektrizitätsspeicherelementen, die jeweils Elektrodenanschlüsse aufweisen, wobei das Verfahren umfasst:
Bereitstellen von mindestens zwei Anschlussplattenmodulen (102), wobei jedes der mindestens zwei Verbindungsplatinenmodule (102) umfasst:
eine Halterung (106) mit einer Vielzahl von Verbindungselement-Montageabschnitten (112), die so angeordnet sind, dass sie eine erste Reihe (125a) entlang einer eines Paars von ersten Seitenkanten des Anschlussplattenmoduls bilden, und dass sie eine zweite Reihe (125b) entlang der anderen des Paars von ersten Seitenkanten des Anschlussplattenmoduls (102) bilden, wobei sich das Paar von ersten Seitenkanten des Anschlussplattenmoduls in einer ersten Richtung (122) erstreckt;
eine Vielzahl von Verbindungselementen (110), die in der Vielzahl von Verbindungselement-Befestigungsabschnitten (112) angebracht sind, um die Elektrodenanschlüsse von benachbarten Elektrizitätsspeicherelementen miteinander zu verbinden; und
einen Schaltungsplattentragabschnitt (117), der an der Halterung (106) angeordnet und zur Aufnahme einer Schaltungsplatine (106) ausgebildet ist, wobei in dem Schaltungsplattentragabschnitt (117) mindestens ein Halteelement (120) angeordnet ist, das zum Halten der Schaltungsplatine (108) durch eine Presspassverbindung ausgebildet ist;
Verbinden von jeweils zwei benachbarten Anschlussplattenmodulen (102) miteinander durch mindestens eine Verbindung (130) einer Schnittstelle (104), die sich in einer von der ersten Richtung (122) verschiedenen zweiten Richtung (128) erstreckt;
Anbringen der modularen Anschlussplatte (100) an der Gruppe von Stromspeicherelementen.

13. Verfahren nach Anspruch 12, wobei die beiden benachbarten Anschlussplattenmodule (102) miteinander verbunden werden, indem die beiden benachbarten Anschlussplattenmodule (102) entlang der ersten Richtung (122) zusammengebaut werden.

14. Verfahren nach Anspruch 12, wobei die beiden benachbarten Anschlussplattenmodule (102) miteinander verbunden werden, indem die beiden benachbarten Anschlussplattenmodule (102) entlang einer Richtung diagonal zu der ersten Richtung (122) zusammengefügt werden.

15. Verfahren nach einem der Ansprüche 12 bis 14, ferner aufweisend
Montieren einer Leiterplatte (108) in dem Schaltungsplattentragabschnitt (117) jedes der mindestens zwei Anschlussplattenmodule (102) über die Presspassverbindung.

## Revendications

1. Carte de connexion modulaire (100), configurée pour être fixée à un groupe d'éléments de stockage d'électricité incluant chacun des bornes d'électrode, la carte de connexion modulaire (100) comprenant :
au moins deux modules de carte de connexion (102), chacun desdits au moins deux modules de carte de connexion (102) comprenant :
une fixation (106) incluant une pluralité de portions de montage d'élément de connexion (112), qui sont agencées pour former une première rangée (125a) le long d'un bord d'une paire de premiers bords latéraux du module de carte de connexion (102), et pour former une deuxième rangée (125b) le long de l'autre bord de la paire de premiers bords latéraux du module de carte de connexion (100), dans laquelle la paire de premiers bords latéraux du module de carte de connexion s'étend dans une première direction (122) ;
une pluralité d'éléments de connexion (110), qui sont montés dans la pluralité de portions de montage d'élément de connexion (112), pour connecter entre elles les bornes d'électrode d'éléments de stockage d'électricité adjacents ; et
une portion de support de circuit imprimé (117), qui est agencée sur la fixation (106) et configurée pour recevoir un circuit imprimé (108), dans laquelle au moins un élément de maintien (120) est agencé dans la portion de support de circuit imprimé et configuré pour maintenir le circuit imprimé via une connexion par sertissage ;
dans laquelle est pourvue, entre chaque paire de modules de carte de connexion adjacents (102), une interface (104) qui s'étend dans une deuxième direction (128) différente de la première direction (122), et qui comprend au moins un joint (130) pour joindre entre eux les deux modules de carte de connexion adjacents (102).

2. Carte de connexion modulaire (100) selon la revendication 1, dans laquelle lesdits au moins deux modules de carte de connexion (102) sont joints entre eux à l'interface (104) entre chaque paire de modules de carte de connexion adjacents (102).

3. Carte de connexion modulaire (100) selon la revendication 1 ou 2, dans laquelle l'interface (104) entre les modules de chaque paire de modules de carte de connexion adjacents (102) comprend au moins deux joints (130) pourvus sur des côtés opposés le long de l'interface (104).

4. Carte de connexion modulaire (100) selon l'une des revendications 1 à 3, dans laquelle ledit au moins un joint (130) est un joint parmi un joint à queue d'aronde, un joint à charnière et un joint à chaîne.

5. Carte de connexion modulaire (100) selon l'une des revendications 1 à 4, dans laquelle l'interface (104) comprend une première région d'interface (136a, 138b) qui s'étend entre la première rangée d'éléments de connexion (110), et une deuxième région d'interface (136b, 138a) qui s'étend entre la deuxième rangée d'éléments de connexion (110), et dans laquelle la première région d'interface (136a, 138b) est décalée par rapport à la deuxième région d'interface (136b, 138a) dans la première direction (122), de sorte qu'un élément de stockage d'électricité agencé à l'interface (104) est connecté électriquement à un élément de connexion respectif (110) de chacun des deux modules de carte de connexion adjacents (102).

6. Carte de connexion modulaire (100) selon l'une des revendications 1 à 5, dans laquelle un connecteur électronique (148, 248, 348) est pourvu à l'interface entre les modules de chaque paire de modules de carte de connexion adjacents (102), et dans laquelle le connecteur électronique comprend une première interface de contact pour connecter électriquement un premier circuit imprimé (108a) supportable sur l'un des deux modules de carte de connexion adjacents (102) au connecteur électronique (148, 248, 348) et une deuxième interface de contact pour connecter électriquement un deuxième circuit imprimé (108b), supportable sur l'autre module desdits deux modules de carte de connexion adjacents (102), au connecteur électronique (148, 248, 348).

7. Carte de connexion modulaire (100) selon la revendication 6, dans laquelle la première interface de contact et la deuxième interface de contact sont connectées électriquement par des conducteurs plats flexibles (156).

8. Carte de connexion modulaire (100) selon l'une des revendications 6 et 7, dans laquelle une prise (153, 253) de la première interface de contact et une prise (155, 255) de la deuxième interface de contact sont montées sur un même module desdits deux modules de carte de connexion adjacents (102).

9. Ensemble de connexion modulaire (101) comprenant la carte de connexion modulaire (100) selon l'une quelconque des revendications précédentes, dans lequel chacun desdits au moins deux modules de carte de connexion (102) comprend en outre un circuit imprimé (108) fixé dans la portion de support de circuit imprimé (117) via la connexion par sertissage.

10. Ensemble de connexion modulaire (101) selon la revendication 9, dans lequel le circuit imprimé (108) comprend une pluralité de trous traversants de sertissage (118), et dans lequel chacun des éléments de connexion (110) est connecté électriquement au circuit imprimé correspondant via une borne sertie (120), la borne sertie (120) comprenant :
une extrémité de connexion, qui est connectée électriquement à l'élément de connexion (110) ; et
une extrémité sertie, qui s'étend dans au moins une partie d'un trou de ladite pluralité de trous de sertissage (120) pourvus sur le circuit imprimé (108) et est connectée électriquement au circuit imprimé (108).

11. Ensemble de connexion modulaire (101) selon la revendication 9 ou 10, dans lequel chaque circuit imprimé (108) comprend une circuiterie pour mesurer un état, incluant au moins un état parmi une tension et une température, et facultativement une circuiterie pour équilibrer une charge de ces éléments de stockage d'électricité, à laquelle est fixé le module de carte de connexion (102) qui supporte le circuit imprimé respectif (108).

12. Procédé de connexion d'une carte de connexion modulaire (100) à un groupe d'éléments de stockage d'électricité incluant chacun des bornes d'électrode, le procédé comprenant :
la fourniture d'au moins deux modules de carte de connexion (102), chacun desdits au moins deux modules de carte de connexion (102) comprenant :
une fixation (106) incluant une pluralité de portions de montage d'élément de connexion (112), qui sont agencées pour former une première rangée (125a) le long d'un bord d'une paire de premiers bords latéraux du module de carte de connexion, et pour former une deuxième rangée (125b) le long de l'autre bord de la paire de premiers bords latéraux du module de carte de connexion (102), dans lequel la paire de premiers bords latéraux du module de carte de connexion s'étend dans une première direction (122) ;
une pluralité d'éléments de connexion (110), qui sont montés dans la pluralité de portions de montage d'élément de connexion (112), pour connecter entre elles les bornes d'électrode d'éléments de stockage d'électricité adjacents ; et
une portion de support de circuit imprimé (117), qui est agencée sur la fixation (106) et configurée pour recevoir un circuit imprimé (106), dans lequel au moins un élément de maintien (120) est agencé dans la portion de support de circuit imprimé (117) et configuré pour maintenir le circuit imprimé (108) via une connexion par sertissage ;
la jonction entre eux des modules de chaque paire de modules de carte de connexion adjacents (102) par au moins un joint (130) d'une interface (104), qui s'étend dans une deuxième direction (128) différente de la première direction (122) ;
la fixation de la carte de connexion modulaire (100) au groupe d'éléments de stockage d'électricité.

13. Procédé selon la revendication 12, dans lequel les deux modules de carte de connexion adjacents (102) sont joints entre eux en assemblant lesdits deux modules de carte de connexion adjacents (102) selon la première direction (122).

14. Procédé selon la revendication 12, dans lequel les deux modules de carte de connexion adjacents (102) sont joints entre eux en assemblant lesdits deux modules de carte de connexion adjacents (102) selon une direction diagonale à la première direction (122).

15. Procédé selon l'une des revendications 12 à 14, comprenant en outre
le montage d'un circuit imprimé (108) dans la portion de support de circuit imprimé (117) de chacun desdits au moins deux modules de carte de connexion (102) via la connexion par sertissage.
